# EUROPÄISCHE PATENTSCHRIFT

(11) **EP 3 253 975 B1**
(45) Veröffentlichungstag und Bekanntmachung des Hinweises auf die Patenterteilung: **21.07.2021**
(21) Anmeldenummer: 16702023.9
(22) Anmeldetag: 21.01.2016
(51) Int. Cl.: F16B 5/07

(54) **BEFESTIGUNGSSYSTEM**
FASTENING SYSTEM
SYSTEME DE FIXATION

(30) Priorität: 03.02.2015 DE 102015001335
(43) Veröffentlichungstag der Anmeldung: 13.12.2017
(73) Patentinhaber: Gottlieb Binder Gmbh & Co. Kg, 71084 Holzgerlingen (DE)
(72) Erfinder: TUMA, Jan, 71083 Herrenberg (DE)
(74) Vertreter: Bartels und Partner, Patentanwälte
(86) Internationale Anmeldenummer: PCT/EP2016/000107
(87) Internationale Veröffentlichungsnummer: WO 2016/124314

(56) Entgegenhaltungen:
- EP-A1- 0 465 983
- US-A- 4 342 139

## Beschreibung

Die Erfindung betrifft eine Befestigungssystem mit den Merkmalen im Oberbegriff von Anspruch 1.

Befestigungssysteme, die es ermöglichen, durch Bildung von Haftverbindungen Gegenstände oder Bauteile an Drittbauteilen festzulegen, sind in verschiedenartigen Ausgestaltungen Stand der Technik. Beispielsweise offenbaren die Dokumente DE 10 2008 007 913 A1 oder DE 10 2010 027 394 A1 Befestigungseinrichtungen, die einsetzbar sind, um beispielsweise an vorgebbaren Stellen von Bauteilen, seien es Teile von Kraftfahrzeugen, Eisenbahnen, Schiffen oder von Flugzeugen, Drittbauteile festzulegen. Im Falle von Fahrzeugen kann es sich bei derartigen Drittbauteilen beispielsweise um Blenden an Karosserieteilen, um Paneele oder um andere flächenartige Verkleidungen handeln. Bei Gebäuden können derartige Befestigungseinrichtungen auch dazu dienen, flächenartige Verkleidungen, wie Paneele oder textile Bahnen, an vorgebbaren Stellen festzulegen, beispielsweise um unschön aussehende Stellen zu kaschieren oder auch eine Wärme- und/oder Schallisolation zu bilden.

Dadurch, dass die Verbindung zwischen dem betreffenden Bauteil und dem daran festzulegenden Drittbauteil anstatt durch Verschrauben, Nieten oder Nageln durch eine Haftverbindung erfolgt, indem Haftverschlusselemente, die mit einem Bauteil verbunden sind, mit korrespondierenden Haftverschlusselementen am jeweiligen Drittbauteil in Hafteingriff gebracht werden, ergibt sich zum einen eine wesentliche Verringerung des Montageaufwandes und zum anderen der besondere Vorteil, dass bei der Herstellung der Haftverbindung Positionstoleranzen zwischen Bauteil und Drittbauteil ausgleichbar sind. Um beim Einsatz derartiger Befestigungseinrichtungen eine einfache und rationelle Montage zu ermöglichen, ist bei einer in DE 10 2012 010 893 A1 offenbarten Befestigungseinrichtung der eingangs genannten Gattung das mit Haftverschlusselementen versehene Trägerteil mit einem vorstehenden Stielteil versehen, das elastisch rückfedernde Verhakungsteile aufweist, mit denen das Trägerteil in einem Befestigungsloch am zugehörigen Bauteil verclipsbar ist.

Die US 4 342 139 beschreibt ein Befestigungssystem mit einem Drittbauteil und einer Befestigungseinrichtung mit einem Trägerteil mit einem über das Trägerteil vorstehenden Stielteil und mit mindestens einem elastisch rückfedernden Verhakungsteil, wobei jeweilige Verhakungsteile in einer Ausgangsstellung sich von dem Stielteil und/oder einem Aufnahmeteil für das jeweilige Verhakungsteil unter Bildung eines Zwischenraumes nach außen weg erstrecken, der sich verringert, sobald unter dem Einfluss einer äußeren Krafteinwirkung das jeweilige Verhakungsteil sich auf das Stiel- und/oder Aufnahmeteil zubewegt, wobei das Trägerteil der Befestigungseinrichtung klemmend in einem Profilkanal des Drittbauteils festlegbar ist, der nach außen hin zumindest bereichsweise von einer Tragplatte des Trägerteils verschlossen ist.

Weitere Befestigungssysteme gehen aus der EP 0 465 983 A1, der EP 0 466 504 A2 und der US 8 281 463 B2 hervor.

Ausgehend von diesem Stand der Technik stellt sich die Erfindung die Aufgabe, eine verbesserte Befestigungseinrichtung dieser Art zur Verfügung zu stellen, die sich insbesondere durch universellere Einsatzmöglichkeiten auszeichnet.

Erfindungsgemäß ist diese Aufgabe durch ein Befestigungssystem gelöst, das die Merkmale des Patentanspruchs 1 in seiner Gesamtheit aufweist. Demgemäß zeichnet sich die Erfindung dadurch aus, dass am Trägerteil von dem Trägerteil vorstehende Haftverschlusselemente angebracht sind; dass das Trägerteil mit seinen vorstehenden Haftverschlusselementen unter Bildung eines wieder lösbaren Haftverschlusses mit korrespondierend ausgebildeten Haft¬verschluss-elementen eines weiteren Drittbauteils in Eingriff bringbar ist; und dass das jeweilige Trägerteil in seinem Ausgangszustand derart in eine Profilöffnung des Profilkanals zwischen seinen Enden einsetzbar ist, dass das jeweilige Verhakungsteil die Profilöffnung zumindest bis zum Erreichen einer Endlage passiert und dass nach Drehen der außerhalb der Profilöffnung liegenden Tragplatte das jeweilige in seiner Endlage befindliche Verhakungsteil in Untergriff mit mindestens einer zuordenbaren, nutartig sich verbreiternden Anlagefläche der Profilöffnung gelangt.

Es ist ferner vorgesehen, dass jeweilige Verhakungsteile in einer Ausgangsstellung sich von dem Stielteil und/oder einem Aufnahmeteil für das jeweilige Verhakungsteil unter Bildung eines Zwischenraums nach außen weg erstrecken, der sich verringert, sobald unter dem Einfluss einer äußeren Krafteinwirkung das jeweilige Verhakungsteil sich auf das Stiel- und/oder Aufnahmeteil zubewegt. Dadurch, dass dergestalt die Verhakungselemente im Unterschied zu der genannten, bekannten Lösung nicht als ohne Zwischenraum in den Stiel einfedernde Noppen, sondern als eine Art Flügel ausgebildet sind, die sich in unbelasteter Ausgangsstellung unter Bildung eines Zwischenraums vom Stiel oder Aufnahmeteil weg nach außen erstrecken, ist die Anbringung am zugeordneten Bauteil nicht auf das Vorhandensein eines entsprechend positionierten, passenden Befestigungslochs beschränkt, sondern es eröffnet sich die Möglichkeit, jeweilige Verhakungsstellen sowohl was die Dimensionierung als auch was die Formgebung anbelangt, freier zu gestalten, so dass der Verhakungseingriff nicht nur punktuell, sondern auch an in gewünschter Richtung variablen Positionen erfolgen kann. Beispielsweise kann der Verhakungseingriff durch Einsetzen in die Öffnung eines sich in einer Richtung erstreckenden, hintergreifbaren Profils erfolgen, so dass die Erfindung besonders universelle Einsatzmöglichkeiten bietet.

Die Anordnung kann so getroffen sein, dass zumindest ein Teil der Verhakungsteile sich außenumfangsseitig vom Stielteil unmittelbar ausgehend weg erstreckt und/oder dass das am Stielteil angeordnete Aufnahmeteil zumindest ein Verhakungsteil trägt.

Bei Ausführungsbeispielen, bei denen am Stielteil, vorzugsweise an dessen freiem Ende, für jeweilige Verhakungsteile ein Aufnahmeteil angeordnet ist, kann dieses block- oder quaderförmig ausgebildet sein und sich mit seiner Längs- und Querachse senkrecht zu der Längsachse des Stielteils erstrecken, wobei vorzugsweise die Hochachse des Aufnahmeteils mit der Längsachse des Stielteils zusammenfällt.

Mit besonderem Vorteil kann das Aufnahmeteil, diametral zu der Längsachse des Stielteils gesehen, zwei einander gegenüberliegende Verhakungsteile aufweisen, wobei vorzugsweise die an den beiden Stirnseiten des Aufnahmeteils gegenüberliegend angeordneten Verhakungsteile in entgegengesetzte Richtungen weisen.

Bei besonders vorteilhaften Ausführungsbeispielen mit an den Stirnseiten des Aufnahmeteils angeordneten Verhakungsteilen sind diese mit Vorteil derart angeordnet, dass der jeweilige Zwischenraum, der zumindest von einer Stirnseite des Aufnahmeteils sowie durch das dieser Stirnseite zugeordnete Verhakungsteil begrenzt ist, sich in Richtung einer Verbindungsstelle zwischen Aufnahme- und Verhakungsteil verjüngt.

Für den Erhalt der elastisch rückfedernden Eigenschaft eines jeden Verhakungsteils erstreckt sich die Verbindungsstelle mit dem Aufnahmeteil vorzugsweise über die gesamte Stirnseite des block- oder quaderförmigen Aufnahmeteils, wobei die Verbindungsstelle eine Wandstärke aufweist, die vorzugsweise dem Ein- bis Dreifachen der Wandstärke des Verhakungsteils entspricht.

Dabei kann die Anordnung mit Vorteil so getroffen sein, dass das jeweils flügelartig ausgebildete Verhakungsteil innerhalb der fiktiv fortgesetzten Seitenflächen des block- oder quaderförmig ausgebildeten Aufnahmeteils liegt, respektive mit diesen fiktiven Seitenflächen bündig abschließt. Bei in einem Eckbereich der zugeordneten Stirnseite des Aufnahmeteils gelegener Verbindungsstelle entspricht so die Länge des vom Verhakungsteil gebildeten Flügels der Breite der Stirnseite.

Das vorzugsweise zylindrisch ausgebildete Stielteil, das vorzugsweise plattenförmig ausgebildete Trägerteil und das block- oder quaderförmig ausgebildete Aufnahmeteil mit seinem jeweiligen flügelartigen Verhakungsteil können vorteilhafterweise einstückig, bevorzugt aus Kunststoffmaterial, gebildet sein, wobei die Haftverschlusselemente mit dem Trägerteil klebend verbunden oder verschmolzen sind.

Nachstehend ist die Erfindung anhand von in der Zeichnung dargestellten Ausführungsbeispielen im Einzelnen erläutert. Es zeigen:
- Fig. 1: in der Art einer schematisch vereinfachten Funktionsskizze und in abgebrochen gezeichneter perspektivischer Schrägansicht ein Ausführungsbeispiel des erfindungsgemäßen Befestigungssystems;
- Fig. 2: eine gegenüber einer praktischen Ausführungsform in etwa doppelter Größe gezeichnete Seitenansicht eines Ausführungsbeispiels des als Befestigungseinrichtung für das Befestigungssystem von Fig. 1 vorgesehenen Trägerteils mit einem daran anzubringenden Haftverschlusselement, dessen Haftelemente ebenfalls schematisch vereinfacht als Pilzköpfe dargestellt sind;
- Fig. 3: eine perspektivische Schrägansicht des gesondert dargestellten Haftverschlusselements von Fig. 2;
- Fig. 4: eine Ansicht auf die Unterseite des Trägerteils von Fig. 2;
- Fig. 5 und 6: Ansichten auf die beiden gegenüberliegenden Stirnseiten des Trägerteils von Fig. 4;
- Fig. 7 und 8: Ansichten auf die gegenüberliegenden Langseiten des Trägerteils von Fig. 4;
- Fig. 9 und 10: perspektivische Schrägansichten, gesehen auf Unterseite bzw. Oberseite des Trägerteils;
- Fig. 11: eine abgebrochene Stirnansicht des in Fig. 1 gezeigten, mittels der Befestigungseinrichtung anzubringenden Paneels mit einem in Montage- oder Ausgangsstellung befindlichem Trägerteil mit stark schematisiert als Haken angedeuteten Haftelementen;
- Fig. 12: eine der Fig. 11 entsprechende Darstellung mit in die Funktionsstellung gedrehtem Trägerteil; und
- Fig. 13: eine der Fig. 1 ähnliche abgebrochene perspektivische Schrägansicht einer abgewandelten Ausführungsform des erfindungsgemäßen Befestigungssystems.

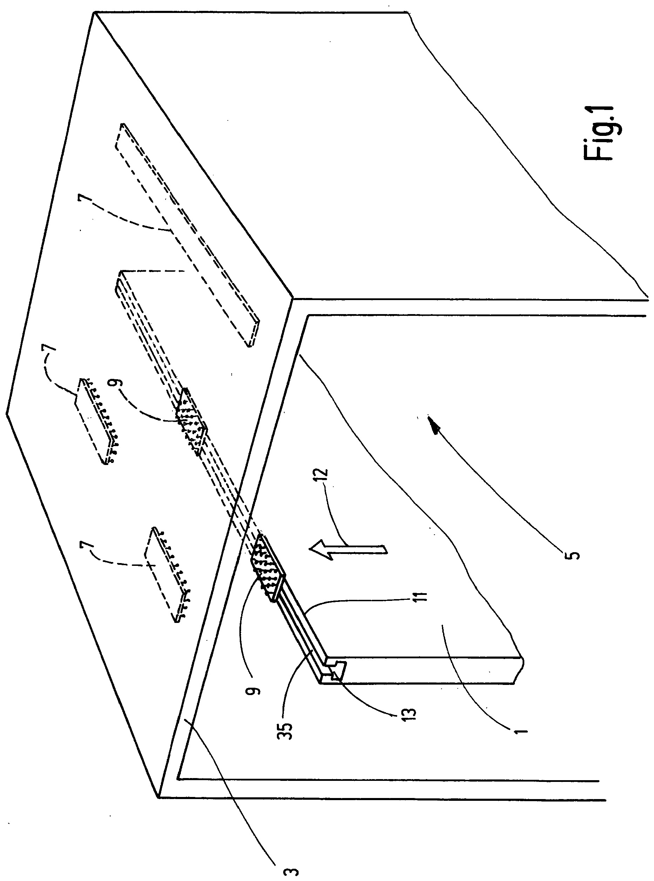

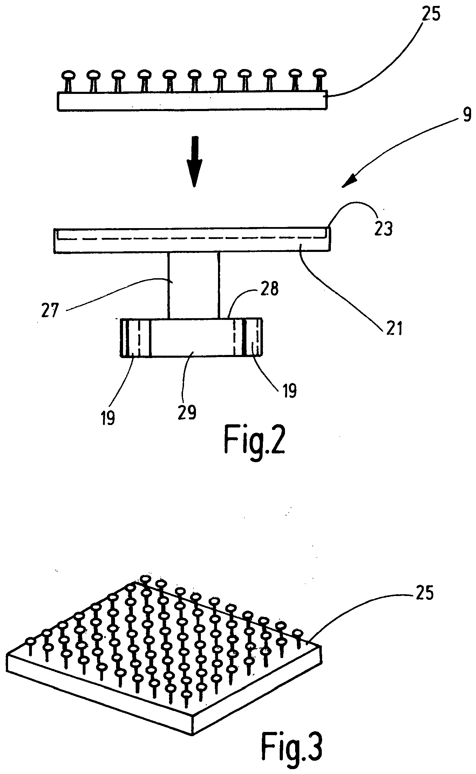

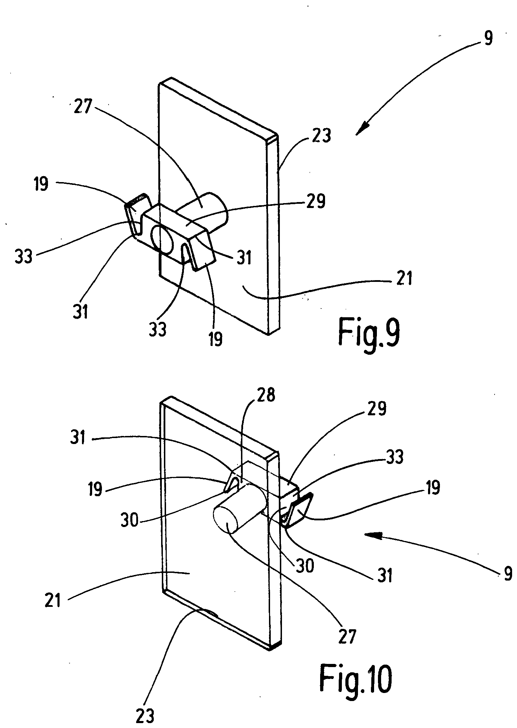

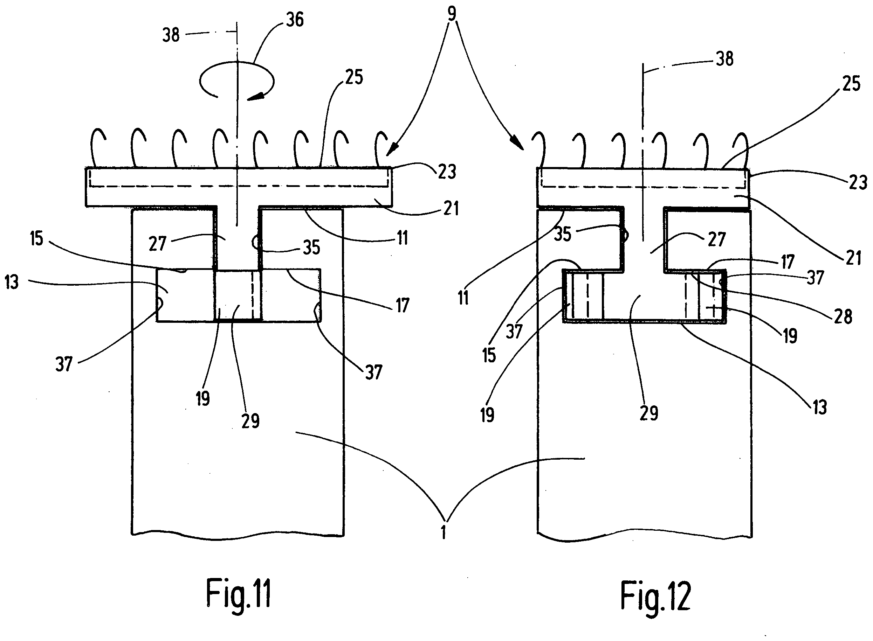

Die Fig. 1 verdeutlicht ein Ausführungsbeispiel, bei dem das erfindungsgemäße Befestigungssystem dazu benutzt ist, um mittels der erfindungsgemäßen Befestigungseinrichtung ein flächiges Paneel 1 an der Decke 3 in einem Raum 5 eines nicht dargestellten Gebäudes durch Bilden von Haftverbindungen anzubringen. An der Decke 3 sind hierfür zur Bildung von Verbindungsbereichen zwei Haftverschlusselemente 7 angebracht, die mit Trägerteilen 9 der erfindungsgemäßen Befestigungseinrichtung in Hafteingriff kommen, wenn das Paneel 1 mit seiner geraden Oberkante 11 in Richtung eines Bewegungspfeils 12 an die Decke 3 angelegt wird. Beim gezeigten Beispiel sind zur Bildung der Verbindungsbereiche lediglich zwei Haftverschlusselemente 7 mit zugeordneten Trägerteilen 9 in der vereinfachten Darstellung von Fig. 1 gezeigt. Es versteht sich, dass eine größere Anzahl von Verbindungsstellen mit einer entsprechenden Mehrzahl von Trägerteilen 9 und zugeordneten Haftverschlusselementen 7 vorgesehen sein kann. Ebenso kann, wie in Fig. 1 angedeutet ist, ein langgestrecktes Haftverschlusselement 7 vorgesehen sein, das sich im Wesentlichen über die Gesamtlänge eines anzubringenden Bauteils, wie ein Paneel 1, erstreckt, um mit einer entsprechenden Anzahl von Trägerteilen 9 in Hafteingriff zu kommen. Die Einzelheiten der Ausbildung der Trägerteile 9 sind den Fig. 2 bis 10 entnehmbar. Aus den Fig. 11 und 12 ist die Art und Weise der Anbringung der Trägerteile 9 am Paneel 1 ersichtlich.

Wie die letztgenannten Figuren sowie Fig. 1 zeigen, ist für die Verankerung der Trägerteile 9 ein entlang der Oberkante 11 des betreffenden Bauteils, vorliegend des Paneels 1, ein Profilkanal 13 vorgesehen, der, wie am deutlichsten aus Fig. 11 und 12 erkennbar ist, innere Anlageflächen 15 und 17 bildet, an denen das jeweilige Trägerteil 9 mit Verhakungsteilen 19 des jeweiligen Trägerteils 9 verankerbar ist. Die Ausbildung der Trägerteile 9 mit den Verhakungsteilen 19 ist den Fig. 2 bis 10 entnehmbar. Wie am deutlichsten die Fig. 2, 4 sowie 9 und 10 zeigen, weisen die Trägerteile 9 eine rechteckförmige, ebene Trägerplatte 21 auf, an deren Oberseite sich ein geringfügig vorstehender Umfangsrand 23 befindet. Dieser bildet eine Einfassung für ein durch klebende oder thermische Verbindung angebrachtes, dem oben genannten Stand der Technik entsprechendes Haftverschlusselement 25, das in Fig. 2 vor dem Anbringen an der Trägerplatte 21 und in Fig. 3 gesondert dargestellt ist. In diesen Figuren sind die zugehörigen Haftelemente schematisiert als Pilzköpfe angedeutet, wobei in diesem Fall an den zugeordneten Haftverschlusselementen 7 des betreffenden Drittbauteils ebenfalls Pilzköpfe zur Bildung eines hermaphroditischen Haftverschlusses vorgesehen sein können. Es versteht sich, dass andere Art von Haftelementen vorgesehen sein können, beispielsweise Haken am Trägerteil 9, wie in den Fig. 11 und 12 schematisiert angedeutet ist, die mit einem Flauschmaterial an den Haftverschlusselementen 7 zusammenwirken können, oder Schlaufen an den Trägerteilen 9 für die Zusammenwirkung mit Hakenelementen an den Haftverschlusselementen 7 oder in umgekehrter Anordnung.

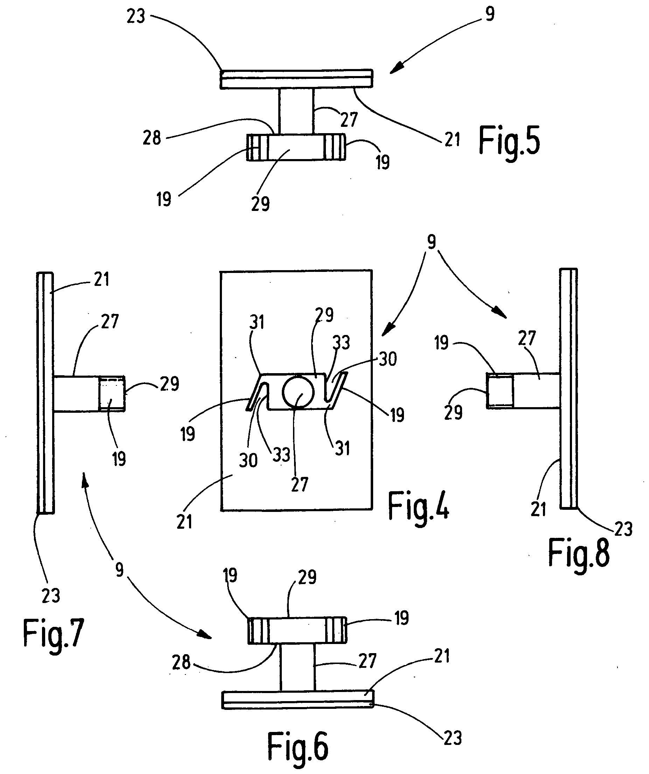

Die im vorliegenden Beispiel aus durchsichtigem Kunststoffmaterial gebildeten Trägerteile 9 weisen im Zentrum der Trägerplatte 21 von deren Unterseite im rechten Winkel zur Plattenebene vorstehend ein kreiszylindrisches Stielteil 27 auf, das den Träger für die Verhakungsteile 19 bildet. Das Stielteil 27 ist, wie die Fig. 4, 9 und 10 zeigen, als rohrartiger Hohlkörper ausgebildet. Beim gezeigten Beispiel sind die Verhakungsteile 19 nicht unmittelbar am freien Ende des Stielteils 27 angeordnet, sondern an einem blockförmig in Form eines rechteckigen Quaders gestalteten Aufnahmeteil 29. Dieses erstreckt sich am freien Ende des Stielteils 27 mit seiner Längs- und Querachse senkrecht zur Längsachse des Stielteils 27. Wie am deutlichsten den Fig. 4 bis 10 entnehmbar ist, sind am Aufnahmeteil 29 die Verhakungsteile 19 an Verbindungsstellen 31 angeformt, die am Aufnahmeteil 29 diametral einander gegenüberliegen. Dabei sind die Verhakungsteile 19 als Flügel gleicher Form und Größe ausgebildet, die, wie am deutlichsten aus Fig. 4 sowie 9 und 10 ersichtlich ist, in unbelastetem Zustand von den als Biegestellen dienenden Verbindungsstellen 31 weg elastisch unter Bildung eines Zwischenraums 30 zwischen Flügel und Stirnseite 33 des Aufnahmeteils29 nachgiebig nach außen vorstehen. Der Form des Aufnahmeteils 29 entsprechend besitzen die Flügel eine rechteckige Form, erstrecken sich dementsprechend über den gesamten Bereich der Stirnseiten 33 des Aufnahmeteils 29 und besitzen etwa die gleiche Flügellänge wie die zugewandte Stirnseite 33.

Die Fig. 11 und 12 verdeutlichen den Montage- oder Verankerungsvorgang im Profilkanal 13 des betreffenden Drittbauteils, wie des Paneels 1. Die Fig. 11 zeigt das Trägerteil 9 in einer Ausgangsstellung mit einer Drehposition, bei der sich die Trägerplatte 21 über die Oberkante 11 seitlich auskragend hinaus erstreckt. Bei dieser Drehposition sind die flügelartigen Verhakungsteile 19 in der Längsrichtung des Profilkanals 13 abgespreizt, so dass sie mit dem Stielteil 27 durch die Profilöffnung 35 des Profilkanals 13 eingesetzt werden können, siehe Fig. 11. Bei Verdrehen um die Längsachse 38 um 90°, wie mit Drehpfeil 36 in Fig. 11 angedeutet ist, kommen die Verhakungsteile 19 in federnde Anlage mit den Seitenwänden 37, die sich im Bereich der nutartigen Verbreiterung des Profilkanals 13 befinden.

Bei der in Fig. 12 gezeigten Drehposition ist nicht nur das Trägerteil 9 mit seiner Trägerplatte 21 bündig mit den Außenseiten des Paneels 1, sondern das blockartige Aufnahmeteil 29 am Stielteil 27 ist auch mit seiner Oberseite 28 in Untergriff mit den Anlageflächen 15 und 17 in der Verbreiterung des Profilkanals 13, so dass das Trägerteil 9 gegen Ausheben aus dem Profilkanal 13 formschlüssig gesichert ist. Bei dieser Funktionsposition ist das jeweilige Trägerteil 9 gegen Verschieben längs des Profilkanals 13 reibschlüssig durch die federnd an den Seitenwänden 37 anliegenden Verhakungsteile 19 gesichert. Für die Anbringung an der Decke 3 lassen sich die Trägerteile 9 so in die zugeordneten, mit den Haftverschlusselementen 7 am Drittbauteil fluchtenden Positionen einstellen, sind jedoch gegen ungewollte Verschiebebewegungen beim Montagevorgang durch den Reibschluss gesichert, so dass sich das Bauteil, hier Paneel 1, mühelos und sicher mit den Haftverschlusselementen 7 am Drittbauteil in Hafteingriff bringen lässt.

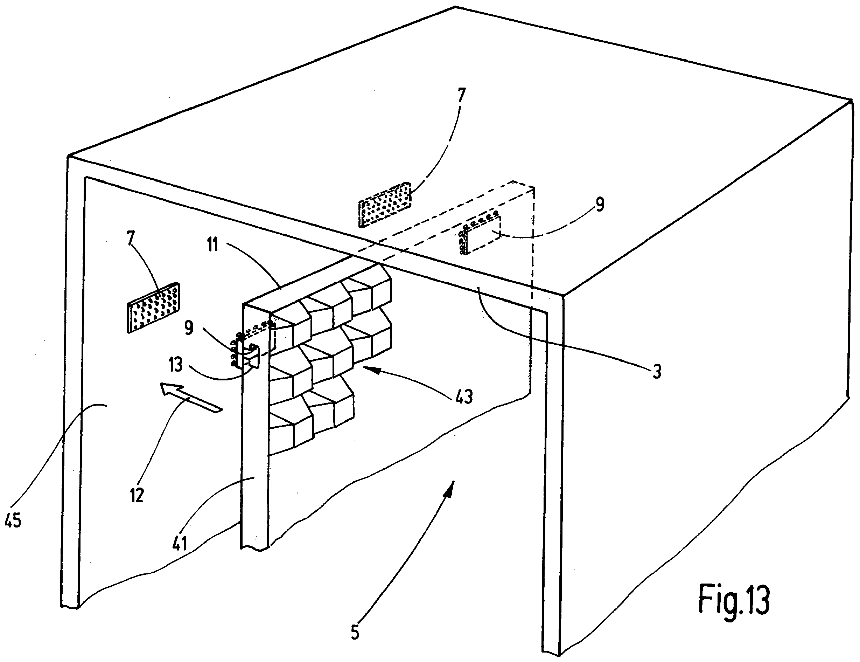

Die Fig. 13 verdeutlicht eine Ausführungsform des Befestigungssystems, bei dem, um den betreffenden Raum 5 als einen sog. schalltoten Raum auszubilden, als mittels Haftverbindung anzubringendes Bauteil eine Wandverkleidung 41 vorgesehen ist. Bei dieser handelt es sich um ein flächiges Bauteil, das an der in Fig. 13 sichtbaren Seite ein nur teilweise angedeutetes, für diesen Zweck bekanntes Muster aus vorspringenden Körpern aufweist. Für die Anbringung der Wandverkleidung 41 an einer Seitenwand 45 des Raums 5 sind an der Seitenwand 45 Verhakungselemente 7 für den Hafteingriff mit Verhakungsteilen 9 vorgesehen, die sich an der Rückseite der Wandverkleidung 41 befinden. Der für die Verankerung der Verhakungsteile 9 vorgesehene Profilkanal 13 verläuft im Abstand von der Oberkante 11 in Horizontalrichtung auf Höhe der an der Seitenwand 45 befindlichen Haftverschlussteile 7 für die Bildung der Haftverbindung bei Anlagen der Wandverkleidung 41 in Richtung des Bewegungspfeils 12. Es versteht sich, dass an der Seitenwand 45 und/oder an der Rückseite der Wandverkleidung 41 eine größere Anzahl von Haftverschlusselementen 7 bzw. zugeordneten Haftverschlusselementen 9 vorgesehen sein kann, die über beliebige Flächenbereiche der Wandverkleidung 41 verteilt sein können.

Während vorstehend die Verhakungsteile 19 als gleichartig geformte Flügel gebildet sind, die von beiden Stirnseiten 33 des blockartigen Aufnahmeteils 29 ausgehend in der Ausgangsstellung nach außen abgespreizt sind, versteht sich, dass eine andere Anzahl oder andersartig geformte Verhakungsteile vorgesehen sein könnten.

## Patentansprüche

1. Befestigungssystem mit einem Drittbauteil (1; 41) und einer Befestigungseinrichtung mit einem Trägerteil (9), mit einem über das Trägerteil (9) vorstehenden Stielteil (27) und mit mindestens einem elastisch rückfedernden Verhakungsteil (19), wobei jeweilige Verhakungsteile (19) in einer Ausgangsstellung sich von dem Stielteil (27) und/oder einem Aufnahmeteil (29) für das jeweilige Verhakungsteil (19) unter Bildung eines Zwischenraumes (30) nach außen weg erstrecken, der sich verringert, sobald unter dem Einfluss einer äußeren Krafteinwirkung das jeweilige Verhakungsteil (19) sich auf das Stiel-(27) und/oder Aufnahmeteil (29) zubewegt, wobei das Trägerteil (9) der Befestigungseinrichtung klemmend in einem Profilkanal (13) des Drittbauteils (1; 41) festlegbar ist, der nach außen hin zumindest bereichsweise von einer Tragplatte (21) des Trägerteils (9) verschlossen ist,
**dadurch gekennzeichnet,**
**dass** am Trägerteil (9) von dem Trägerteil (9) vorstehende Haftverschlusselemente (25) angebracht sind;
**dass** das Trägerteil (9) mit seinen vorstehenden Haftverschlusselementen (25) unter Bildung eines wieder lösbaren Haftverschlusses mit korrespondierend ausgebildeten Haftverschlusselementen (7) eines weiteren Drittbauteils (3; 45) in Eingriff bringbar ist; und
**dass** das jeweilige Trägerteil (9) in seinem Ausgangszustand derart in eine Profilöffnung (35) des Profilkanals (13) zwischen seinen Enden einsetzbar ist, dass das jeweilige Verhakungsteil (19) die Profilöffnung (35) zumindest bis zum Erreichen einer Endlage passiert und dass nach Drehen der außerhalb der Profilöffnung (35) liegenden Tragplatte (21) das jeweilige in seiner Endlage befindliche Verhakungsteil (19) in Untergriff mit mindestens einer zuordenbaren, sich nutartig verbreiternden Anlagefläche (15, 17) der Profilöffnung (35) gelangt.

2. Befestigungssystem nach Anspruch 1, **dadurch gekennzeichnet, dass** zumindest ein Teil der Verhakungsteile (19) sich außenumfangsseitig vom Stielteil (27) unmittelbar ausgehend wegerstreckt und/oder dass das am Stielteil (27) angeordnete Aufnahmeteil (29) zumindest ein Verhakungsteil (19) trägt.

3. Befestigungssystem nach Anspruch 1 oder 2, **dadurch gekennzeichnet, dass** das am Stielteil (27), vorzugsweise an dessen freiem Ende, angeordnete Aufnahmeteil (29) block- oder quaderförmig ausgebildet ist und sich mit seiner Längs- und Querachse senkrecht zu der Längsachse (38) des Stielteils (27) erstreckt.

4. Befestigungssystem nach einem der vorstehenden Ansprüche, **dadurch gekennzeichnet, dass** die Hochachse des Aufnahmeteils (29) mit der Längsachse (38) des Stielteils (27) zusammenfällt.

5. Befestigungssystem nach einem der vorstehenden Ansprüche, **dadurch gekennzeichnet, dass** das Aufnahmeteil (29), diametral zu der Längsachse (38) des Stielteils (27) gesehen, zwei einander gegenüberliegende Verhakungsteile (19) aufweist.

6. Befestigungssystem nach einem der vorstehenden Ansprüche, **dadurch gekennzeichnet, dass** die an den beiden Stirnseiten (33) des Aufnahmeteils (29) gegenüberliegend angeordneten Verhakungsteile (19) in entgegengesetzte Richtungen weisen.

7. Befestigungssystem nach einem der vorstehenden Ansprüche, **dadurch gekennzeichnet, dass** der jeweilige Zwischenraum (30), der zumindest von einer Stirnseite (33) des Aufnahmeteils (29) sowie durch das dieser Stirnseite (33) zugeordnete Verhakungsteil (19) begrenzt ist, sich in Richtung einer Verbindungsstelle (31) zwischen Aufnahme-(29) und Verhakungsteil (19) verjüngt.

8. Befestigungssystem nach einem der vorstehenden Ansprüche, **dadurch gekennzeichnet, dass** für den Erhalt der elastisch rückfedernden Eigenschaft eines jeden Verhakungsteils (19) die Verbindungsstelle (31) sich über die gesamte Stirnseite (33) des block- oder quaderförmigen Aufnahmeteils (29) erstreckt mit einer Wandstärke, die vorzugsweise dem Ein- bis Dreifachen der Wandstärke des Verhakungsteils (19) entspricht.

9. Befestigungssystem nach einem der vorstehenden Ansprüche, **dadurch gekennzeichnet, dass** das jeweils flügelartig ausgebildete Verhakungsteil (19) innerhalb der fiktiv fortgesetzten Seitenflächen des block- oder quaderförmig ausgebildeten Aufnahmeteils (29) liegt, respektive mit diesen fiktiven Seitenflächen bündig abschließt.

10. Befestigungssystem nach einem der vorstehenden Ansprüche, **dadurch gekennzeichnet, dass** das vorzugsweise zylindrisch ausgebildete Stielteil (27), das vorzugsweise plattenförmig ausgebildete Trägerteil (9) und das block- oder quaderförmig ausgebildete Aufnahmeteil (29) mit seinem jeweiligen flügelartigen Verhakungsteil (19) einstückig, bevorzugt aus Kunststoffmaterial, gebildet sind und dass die Haftverschlusselemente (25) mit dem Trägerteil (9) klebend verbunden oder verschmolzen sind.

11. Befestigungssystem nach einem der vorstehenden Ansprüche, **dadurch gekennzeichnet, dass** in der Endlage der jeweiligen Befestigungseinrichtung (9) innerhalb des Profilkanals (13) die jeweils zugeordnete Tragplatte (21) um die Längsachse (38) des Stielteiles (27) um 90° in eine Richtung verschwenkt ist, bei der die flügelartigen Verhakungsteile (19) mit ihrer Rückstellkraft in Anlage mit den Seitenwänden (37) des Profilkanals (13) im Bereich seiner nutartigen Verbreiterung gelangen.

12. Befestigungssystem nach einem der vorstehenden Ansprüche, **dadurch gekennzeichnet, dass** das eine Drittbauteil aus einer vorzugsweise schallschluckenden Paneele (1; 41) oder Gardine besteht und dass das weitere Drittbauteil eine Gebäude- (3; 45) oder Fahrzeugwand ist, die die bahnartig verlaufenden und/oder punktuell angeordneten korrespondierenden Haftverschlusselemente (7) zum Festlegen der Paneele (1; 41) oder Gardine mit ihren Haftverschlusselementen (25) an der Gebäude- (3; 45) oder Fahrzeugwand trägt.

13. Befestigungssystem nach einem der vorstehenden Ansprüche, **dadurch gekennzeichnet, dass** der Abstand zwischen freier Profilöffnung (35) und nutartiger Verbreiterung des Profilkanals (13) in dem einen Drittbauteil (1; 41) derart gewählt ist, dass er höchstens gleich oder kleiner ist als die Länge des Stielteils (27) des Trägerteils (9) der Befestigungseinrichtung.

## Claims

1. Fastening system comprising a third component (1; 41) and a fastening means comprising a carrier part (9), having a shaft part (27) which protrudes beyond the carrier part (9), and having at least one elastically resilient interlocking part (19), respective interlocking parts (19) extending outwards, in an initial position, from the shaft part (27) and/or a receiving part (29) for the respective interlocking part (19), forming an intermediate space (30) which reduces as soon as the relevant interlocking part (19) moves towards the shaft (27) and/or receiving part (29) under the influence of an external force effect, it being possible for the carrier part (9) of the fastening means to be fixed in a clamped manner in a profile channel (13) of the third component (1; 41), said channel being closed towards the outside, at least in regions, by a support plate (21) of the carrier part (9),
**characterised in that**
adhesive closure elements (25) protruding from the carrier part (9) are attached to the carrier part (9);
the carrier part (9) can be brought into engagement, by the protruding adhesive closure elements (25) thereof and in a manner forming a detachable adhesive closure, with correspondingly designed adhesive closure elements (7) of a further third component (3; 45); and
**in that** the relevant carrier part (9) can be inserted, in its initial state, into a profile opening (35) of the profile channel (13), between the ends thereof, **in that** the respective interlocking part (19) passes through the profile opening (35) at least until it reaches an end position, and **in that**, following rotation of the support plate (21) located outside the profile opening (35), the relevant interlocking part (19), located in the end position thereof, engages below at least one contact surface (15, 17) of the profile opening (35) which can be associated therewith and widens in a groove-like manner.

2. Fastening system according to claim 1, **characterised in that** at least some of the interlocking parts (19) extend peripherally in a manner proceeding directly from the shaft part (27), and/or such that the receiving part (29) arranged on the shaft part (27) carries at least one interlocking part (19).

3. Fastening system according to either claim 1 or claim 2, **characterised in that** the receiving part (29) arranged on the shaft part (27), preferably at the free end thereof, is designed so as to be block-shaped or cuboidal and extends such that the longitudinal and transverse axis thereof is perpendicular to the longitudinal axis (38) of the shaft part (27).

4. Fastening system according to any one of the preceding claims, **characterised in that** the vertical axis of the receiving part (29) coincides with the longitudinal axis (38) of the shaft part (27).

5. Fastening system according to any one of the preceding claims, **characterised in that**, viewed diametrically to the longitudinal axis (38) of the shaft part (27), the receiving part (29) comprises two mutually opposing interlocking parts (19).

6. Fastening system according to any one of the preceding claims, **characterised in that** the interlocking parts (19) arranged opposingly on the two end faces (33) of the receiving part (29) face in opposite directions.

7. Fastening system according to any one of the preceding claims, **characterised in that** the respective intermediate space (30), which is delimited at least by one end face (33) of the receiving part (29) and by the interlocking part (19) associated with said end face (33), tapers in the direction of a connection point (31) between the receiving (29) and interlocking part (19).

8. Fastening system according to any one of the preceding claims, **characterised in that**, in order to retain the elastically resilient property of each interlocking part (19), the connection point (31) extends over the entire end face (33) of the block-shaped or cuboid receiving part (29), having a wall thickness which preferably corresponds to one to three times the wall thickness of the interlocking part (19).

9. Fastening system according to any one of the preceding claims, **characterised in that** the interlocking part (19), designed in a wing-like manner in each case, is located within the notionally continued side surfaces of the block-shaped or cuboid receiving part (29), or ends flush with said notional side surfaces.

10. Fastening system according to any one of the preceding claims, **characterised in that** the preferably cylindrical shaft part (27), the preferably plate-shaped carrier part (9), and the block-shaped or cuboid receiving part (29), are formed integrally with the respective wing-like locking part (19) thereof, preferably from plastics material, and **in that** the adhesive closure elements (25) are adhesively bonded or fused to the carrier part (9).

11. Fastening system according to any one of the preceding claims, **characterised in that**, in the end position of the relevant fastening means (9) inside the profile channel (13), the respective associated support plate (21) is pivoted through 90° about the longitudinal axis (38) of the shaft part (27) in a direction in which the wing-like interlocking parts (19) come into contact, by means of the resetting force thereof, with the side walls (37) of the profile channel (13), in the region of the groove-like widening thereof.

12. Fastening system according to any one of the preceding claims, **characterised in that** one third component consists of a preferably sound-absorbing panel (1; 41) or curtain, and **in that** the further third component is a building (3; 45) or vehicle wall which carries the corresponding adhesive closure elements (7), which extend in a web-like manner and/or are arranged at points, for fixing the panels (1; 41) or curtain, by means of the adhesive closure elements (25) thereof, to the building (3; 45) or vehicle wall.

13. Fastening system according to any one of the preceding claims, **characterised in that** the spacing between the free profile opening (35) and the groove-like widening of the profile channel (13) in one third component (1; 41) is selected such that it is at most equal to or less than the length of the shaft part (27) of the carrier part (9) of the fastening means.

## Revendications

1. Système de fixation comprenant une pièce (1 ; 41) tierce et un dispositif de fixation ayant une partie (9) de support, ayant une partie (27) de tige en saillie au-dessus de la partie (9) de support et ayant au moins une partie (19) d'accrochage revenant élastiquement à la manière d'un ressort, dans lequel les parties (19) respectives d'accrochage s'étendent dans une position initiale de la partie (27) de tige et/ou d'une partie (29) de réception de la partie (19) respective d'accrochage, en s'éloignant vers l'extérieur avec formation d'un espace (30) intermédiaire, qui diminue dès que, sous l'influence d'une force extérieure, la partie (19) respective d'accrochage se déplace vers la partie (27) de tige et/ou la partie (29) de réception, dans lequel la partie (9) de support du dispositif de fixation peut être fixée avec serrage dans un canal (13) profilé de la pièce (1 ; 41) tierce, qui est fermé vers l'extérieur, au moins par endroits, par une plaque (21) de support de la partie (9) de support,
**caractérisé**
**en ce que** sur la partie (9) de support sont montés des éléments (25) de fermeture auto-agrippante en saillie de la partie (9) de support ;
**en ce que** la partie (9) de support avec ses éléments (25) de fermeture auto-agrippante en saillie peut, avec formation d'une fermeture auto-agrippante pouvant être redéfaite, être mise en prise avec des éléments (7) de fermeture auto-agrippante, constitués de manière correspondante, d'une autre pièce (3 ; 45) tierce ; et
**en ce que** la partie (9) respective de support peut, dans sa position initiale, être insérée dans une ouverture (35) profilée du canal (13) profilé entre ses extrémités, de manière à ce que la partie (19) respective d'accrochage passe l'ouverture (35) profilée au moins jusqu'à atteindre une position d'extrémité et en ce qu'après rotation de la plaque (21) de support se trouvant à l'extérieur de l'ouverture (35) profilée, la partie (19) d'accrochage respective, se trouvant dans sa position d'extrémité, arrive en prise par-dessous avec au moins une surface (15, 17) de contact, pouvant être associée et s'élargissant à la manière d'une rainure, de l'ouverture (35) profilée.

2. Système de fixation suivant la revendication 1, **caractérisé en ce qu'**au moins une partie des parties (19) d'accrochage s'étend en s'éloignant à partir directement de la partie (27) de tige du côté du pourtour extérieur et/ou **en ce que** la partie (29) de réception, disposée sur la partie (27) de tige, porte au moins une partie (19) d'accrochage.

3. Système de fixation suivant la revendication 1 ou 2, **caractérisé en ce que** la partie (29) de réception montée sur la partie (27) de tige, de préférence à son extrémité libre, est constituée en forme de bloc ou de parallélépipède et s'étend, par ses axes longitudinal et transversal, perpendiculairement à l'axe (38) longitudinal de la partie (27) de tige.

4. Système de fixation suivant l'une des revendications précédentes, **caractérisé en ce que** l'axe vertical de la partie (29) de réception coïncide avec l'axe (38) longitudinal de la partie (27) de tige.

5. Système de fixation suivant l'une des revendications précédentes, **caractérisé en ce que** la partie (29) de réception, considérée diamétralement à l'axe (38) longitudinal de la partie (27) de tige, a deux parties (19) d'accrochage opposées l'une à l'autre.

6. Système de fixation suivant l'une des revendications précédentes, **caractérisé en ce que** les parties (19) d'accrochage, disposées de manière opposée des deux côtés (33) frontaux de la partie (29) de réception, sont tournés dans des sens opposés.

7. Système de fixation suivant l'une des revendications précédentes, **caractérisé en ce que** l'espace (3) intermédiaire respectif, qui est délimité par un côté (33) frontal de la partie (29) de réception, ainsi que par la partie (19) d'accrochage associée à ce côté (33) frontal, se rétrécit en direction d'un point (31) de liaison entre la partie (29) de réception et la partie (19) d'accrochage.

8. Système de fixation suivant l'une des revendications précédentes, **caractérisé en ce que**, pour l'obtention de la propriété de retour élastique à la manière d'un ressort d'une partie (19) d'accrochage, le point (31) de liaison s'étend sur tout le côté (33) frontal de la partie (29) de réception en forme de bloc ou en forme de parallélépipède en ayant une épaisseur de paroi, qui corresponde de préférence à une à trois fois l'épaisseur de paroi de la partie (19) d'accrochage.

9. Système de fixation suivant l'une des revendications précédentes, **caractérisé en ce que** la partie (19) d'accrochage respective, constituée à la manière d'une aile se trouve à l'intérieur des surfaces latérales, prolongées fictivement, de la partie (29) de réception constituée en forme de bloc ou en forme de parallélépipède, en étant à affleurement respectivement avec ces surfaces latérales fictives.

10. Système de fixation suivant l'une des revendications précédentes, **caractérisé en ce que** la partie (27) de tige, constituée de préférence de manière cylindrique, la partie (9) de support, constituée de préférence sous forme de plaque, la partie (29) de réception, constituée sous forme de bloc ou de parallélépipède, avec sa partie (19) respective d'accrochage de type à aile, sont constituées d'une seule pièce, de préférence en matière plastique et **en ce que** les éléments (25) de fermeture auto-agrippante sont reliés par collage ou par fusion à la partie (9) de support.

11. Système de fixation suivant l'une des revendications précédentes, **caractérisé en ce que**, dans la position d'extrémité du dispositif (9) respectif de fixation, dans le canal (13) profilé, la plaque (21) de support respective associée est pivotée autour de l'axe (38) longitudinal de la partie (27) de tige de 90° dans un sens, dans lequel les parties (19) d'accrochage de type à aile arrivent, par leur force de rappel, en contact avec les parois (37) latérales du canal (13) profilé dans la région de son élargissement de type en rainure.

12. Système de fixation suivant l'une des revendications précédentes, **caractérisé en ce que** la une pièce tierce est constituée d'un panneau (1 ; 41) insonorisant ou d'un rideau et **en ce que** l'autre pièce tierce est une paroi de bâtiment (3 ; 45) ou de véhicule, qui porte des éléments (7) de fermeture auto-agrippante correspondant, s'étendant à la manière d'une bande et/ou disposés ponctuellement, pour la fixation des panneaux (1 ; 41) ou des rideaux par leurs éléments (25) de fermeture auto-agrippante à la paroi du bâtiment (3 ; 45) ou du véhicule.

13. Système de fixation suivant l'une des revendications précédentes, **caractérisé en ce que** la distance entre une ouverture (35) profilée libre et un élargissement de type en rainure du canal (13) profilé dans la une pièce (1 ; 41) tierce est choisie de manière à être au plus inférieure ou égale à la longueur de la partie (27) de tige de la partie (9) de support du dispositif de fixation.
